# EUROPÄISCHE PATENTSCHRIFT

(11) **EP 2 916 943 B1**
(45) Veröffentlichungstag und Bekanntmachung des Hinweises auf die Patenterteilung: **30.09.2020**
(21) Anmeldenummer: 13786494.8
(22) Anmeldetag: 06.11.2013
(51) Int. Cl.: B01J 19/00, G01N 30/88, G05B 19/00

(54) **PRODUKTIONSANLAGE EINES CHEMISCHEN ODER PHARMAZEUTISCHEN PRODUKTES**
PRODUCTION INSTALLATION FOR A CHEMICAL OR PHARMACEUTICAL PRODUCT
INSTALLATION DE PRODUCTION D'UN PRODUIT CHIMIQUE OU PHARMACEUTIQUE

(30) Priorität: 08.11.2012 DE 102012110723
(43) Veröffentlichungstag der Anmeldung: 16.09.2015
(73) Patentinhaber: Bayer Aktiengesellschaft, 51373 Leverkusen (DE)
(72) Erfinder: OCHS, Stefan, 51063 Köln (DE); SCHMITZ, Stefan, 50735 Köln (DE); JAGUSCH, Gerd, 51371 Leverkusen (DE); MEYER, Carsten, 50769 Köln (DE); BUSSE, Maik, 40764 Langenfeld (DE)
(74) Vertreter: BIP Patents
(86) Internationale Anmeldenummer: PCT/EP2013/073164
(87) Internationale Veröffentlichungsnummer: WO 2014/072340

(56) Entgegenhaltungen:
- WO-A1-2009/092392
- DE-A1- 19 917 398
- DE-A1-102005 013 915
- US-A1- 2008 233 653
- US-A1- 2012 107 175

## Beschreibung

Die Arbeiten, die zu dieser Erfindung geführt haben, wurden gemäß der Finanzhilfevereinbarung Nr. 228867 im Zuge des Siebten Rahmenprogramms der Europäischen Union RP7/2007-2013 gefördert.

Die vorliegende Erfindung betrifft eine Produktionsanlage für die Produktion eines chemischen und/oder pharmazeutischen Produktes.

Für die Herstellung eines bestimmten chemischen und/oder pharmazeutischen Produktes ist es erforderlich, eine Produktionsanlage mit individuell gestalteter Anlagenstruktur bereitzustellen, um die jeweilig verfahrenstechnisch erforderlichen Prozessschritte in einzelnen Prozessabschnitten durchführen zu können. Ist die Herstellung dieses bestimmten Produkts nicht mehr gewünscht ist, wird die Produktionsanlage üblicherweise wieder abgebaut, um an derselben Stelle eine andere Produktionsanlage mit individuell gestalteter Anlagenstruktur aufbauen zu können, mit der ein anderes chemisches und/oder pharmazeutisches Produkt hergestellt werden kann. Dieses Auf- und Abbauen von Produktionsanlagen ist sehr zeit- und kostenaufwändig. Es besteht daher ein ständiges Bedürfnis, den mit der Produktion verschiedener chemischer und/oder pharmazeutischer Produkte verbundenen Aufwand zu verringern.

Die WO 2009/092392 A1 beschreibt eine Produktionsanlage für die Produktion eines chemischen Produktes, aufweisend wenigstens zwei produktionstechnisch miteinander verbindbare Prozessmodule und ein Kommunikationsnetz, wobei jedes Prozessmodul eine Steuer- und/oder Regeleinrichtung aufweist, über die das jeweilige Prozessmodul kommunikationstechnisch mit dem Kommunikationsnetz verbindbar ist und die dazu eingerichtet ist, das jeweilige Prozessmodul zur eigenständigen Durchführung eines bestimmten Prozessabschnitts der Produktion zu steuern und/oder zu regeln, wobei die elektronischen Einrichtungen derart eingerichtet sind, dass kommunikationstechnisch mit dem Kommunikationsnetz verbundene Prozessmodule automatisch miteinander kommunizieren können. Die Dokumente DE 10 2005 013915 A1 und US 2008/233653 A1 beschreiben ebenfalls Produktionsanlagen.

Aufgabe der Erfindung ist es, ein neuartiges Anlagenkonzept bereitzustellen, mit dem der mit der Produktion verschiedener chemischer und/oder pharmazeutischer Produkte verbundene Aufwand deutlich gegenüber der herkömmlichen Vorgehensweise verringert werden kann.

Diese Aufgabe wird durch eine Produktionsanlage mit den Merkmalen gemäß Patentanspruch 1 gelöst. Bevorzugte Ausgestaltungen der Erfindung sind in den Unteransprüchen angegeben, die jeweils für sich genommen oder in beliebiger Kombination miteinander einen Aspekt der Erfindung darstellen können.

Gemäß Patentanspruch 1 weist die Produktionsanlage wenigstens zwei produktionstechnisch miteinander verbindbare Prozessmodule und ein Kommunikationsnetz auf, wobei jedes Prozessmodul eine elektronische Einrichtung, insbesondere Steuer- und/oder Regeleinrichtung, aufweist, über die das jeweilige Prozessmodul kommunikationstechnisch mit dem Kommunikationsnetz verbindbar ist und die dazu eingerichtet ist, das jeweilige Prozessmodul zur eigenständigen Durchführung eines bestimmten Prozessabschnitts der Produktion zu steuern und/oder zu regeln, wobei die elektronischen Einrichtungen derart eingerichtet sind, dass kommunikationstechnisch mit dem Kommunikationsnetz verbundene Prozessmodule automatisch miteinander kommunizieren können, zumindest derart, dass wenigstens ein Prozessmodul automatisch Informationen von zumindest einem weiteren Prozessmodul abfragt, wobei die abfragbaren Informationen zumindest Informationen in Form von gegebenen und/oder zu erwartenden Prozessparametern bezüglich des von dem diese Informationen zur Verfügung stellenden Prozessmodul durchgeführten bzw. durchzuführenden Prozessabschnitts umfassen, wobei jede elektronische Einrichtung eines Prozessmoduls dazu eingerichtet ist, die von einem weiteren Prozessmodul erhaltenen Informationen zur Steuerung und/oder Regelung des ihr zugeordneten Prozessmoduls zu verwerten.

Die produktionstechnisch miteinander verbindbaren Prozessmodule sind vorzugsweise als Ganzes transportierbare Einheiten, welche zu einem gewünschten Produktionsort, an dem eine entsprechend ausgestattete Produktionsanlage aufgestellt werden soll, transportierbar bzw. von diesem Ort nach Abschluss der gewünschten Produktion weg transportierbar sind. Dies ermöglicht eine einfache und produktionskostenreduzierende Wiederverwendung einzelner Prozessmodule an verschiedenen Produktionsorten. Hierzu weist erfindungsgemäß ein Prozessmodul ein einen einfachen Transport des Prozessmoduls ermöglichendes Gehäuse auf, in dem zur Durchführung des gewünschten Prozessabschnitts geeignete Prozessuntermodule, insbesondere Prozessaggregate, angeordnet sind.

An einem Produktionsort können die Prozessmodule, vorzugsweise über standardisierte Kupplungen, an ein fest installiertes Kommunikationsnetz und an ein Versorgungsnetz angeschlossen werden, mit dem die Prozessmodule mit Stoff und/oder Energie versorgt und/oder in das Stoffe abgegeben werden können, so dass mittels der Prozessmodule im Wesentlichen autonom wenigstens eine chemische Batch-Reaktion und/oder eine kontinuierliche Produktion durchgeführt werden kann. Beispielsweise kann das Versorgungsnetz eine Druckluftleitung zur Zufuhr von Druckluft, eine Speisewasserleitung zur Zufuhr von Wasser, eine Elektroleitung zur Zufuhr von elektrischer Energie, eine Stoffleitung zur Zufuhr von Edukten und/oder Hilfsstoffen und/oder zur Abfuhr von Produkten, Nebenprodukten und/oder Abfallstoffen, eine Kühlleitung zur Zufuhr von Kälte beziehungsweise zur Abfuhr von Wärme und/oder eine Heizleitung zur Zufuhr von Wärme beziehungsweise zur Abfuhr von Kälte aufweisen. Zusätzlich oder alternativ können innerhalb des Gehäuses eines Prozessmoduls ein an das Versorgungsnetz anschließbarer Speicher für Stoff und/oder Energie, und/oder ein Vorratsbehälter für flüssige, feste und/oder gasförmige Stoffe, vorgesehen sein, so dass chemische Reaktionen autonom und unabhängig von einer externen Versorgung erfolgen können. Über das Versorgungsnetz können insbesondere feste, flüssig und/oder gasförmige Stoffe oder Stoffgemische transportiert werden, die einphasig oder mehrphasig, beispielsweise als Suspension oder Emulsion, vorliegen können. Die Prozessmodule können beispielsweise Funktionalitäten zum Heizen, Kühlen, Vermischen, Trennen, Druckregelen, Belüften und/oder Entlüften aufweisen, die es ermöglichen eine chemische Reaktion durchzuführen und Reaktionsbedingungen zu regeln.

Als Kommunikationsnetz kommen verschiedene kabelgebundene oder kabellose Kommunikationsnetze in Betracht. Über das Kommunikationsnetz kann ein standardisierter Informationsaustausch der an das Kommunikationsnetz angeschlossenen Prozessmodule untereinander erfolgen.

Jedes Prozessmodul weist eine elektronische Einrichtung, insbesondere Steuer- und/oder Regeleinrichtung, auf, über die das jeweilige Prozessmodul kommunikationstechnisch mit dem Kommunikationsnetz verbindbar ist. Vorzugsweise erfasst die elektronische Einrichtung, wenn eine Verbindung des jeweiligen Prozessmoduls mit dem Kommunikationsnetz erfolgt, woraufhin von der elektronischen Einrichtung automatisch ein Identifikationssignal in das Kommunikationsnetz eingespeist wird, aus dem beispielsweise die Gattung des Prozessmoduls hervorgeht.

Die elektronische Einrichtung ist dazu eingerichtet, das jeweilige Prozessmodul zur eigenständigen Durchführung eines bestimmten Prozessabschnitts der Produktion zu steuern und/oder zu regeln. Eigenständig bedeutet hierbei, dass der Prozessabschnitt mittels des Prozessmoduls durchgeführt wird, ohne dass hierzu eine Steuerung und/oder Regelung des Prozessabschnitts oder eines Teils davon von einer Einrichtung abseits des Prozessmoduls erfolgen muss. Das Prozessmodul kann hiernach also autonom arbeiten.

Die elektronischen Einrichtungen sind weiterhin derart eingerichtet, dass kommunikationstechnisch mit dem Kommunikationsnetz verbundene Prozessmodule automatisch miteinander kommunizieren können, derart, dass wenigstens ein Prozessmodul automatisch Informationen von zumindest einem weiteren Prozessmodul abfragt. Diese automatische Kommunikation der Prozessmodule untereinander ist insbesondere möglich, wenn Prozessmodule, die an das Kommunikationsnetz angeschlossen werden, mittels ihrer jeweiligen elektronischen Einrichtung ein Identifikationssignal in das Kommunikationsnetz ausgeben, welches von bereits mit dem Kommunikationsnetz verbundenen Prozessmodulen empfangen wird. Vorzugsweise wird den empfangenden Prozessmodulen hierdurch die Adresse des neu an das Kommunikationsnetz angeschlossenen Prozessmoduls mitgeteilt. Dies kann beispielsweise bei den bereits mit dem Kommunikationsnetz verbundenen Prozessmodulen bzw. deren elektronischen Einrichtungen ein Auslöser sein, dass auch diese Prozessmodule ein entsprechendes Identifikationssignal in das Kommunikationsnetz abgeben, welches wiederum von dem neu an das Kommunikationsnetz angeschlossenen Prozessmodul empfangen wird. Besonders bevorzugt weist die Produktionsanlage diesbezüglich eine Plug and Play-Funktionalität auf.

Die von den weiteren Prozessmodulen abfragbaren Informationen umfassen zumindest Informationen in Form von gegebenen und/oder zu erwartenden Prozessparametern bezüglich des von dem diese Informationen zur Verfügung stellenden Prozessmodul durchgeführten bzw. durchzuführenden Prozessabschnitts. Diese Prozessparameter können dann zur Steuerung und/oder Regelung eines abfragenden Prozessmoduls verwendet werden. Insbesondere ist dies für ein nachfolgendes Prozessmodul vorteilhaft, welches zur Weiterverarbeitung eines von einem vorhergehenden Prozessmodul in einem zeitlich vorhergehenden Prozessabschnitt hergestellten Zwischenproduktes vorgesehen ist. Für diese Weiterverarbeitung durch das nachfolgende Prozessmodul ist es von erheblicher Bedeutung, welche Eigenschaften das von dem vorhergehenden Prozessmodul hergestellte Zwischenprodukt aufweist, um ermitteln zu können, welche Randbedingungen zur Herstellung des gewünschten Endproduktes aus dem Zwischenprodukt vorliegen bzw. von dem nachfolgenden Prozessmodul eingehalten werden müssen.

Jede elektronische Einrichtung eines Prozessmoduls ist dazu eingerichtet, die von einem weiteren Prozessmodul erhaltenen Informationen zur Steuerung und/oder Regelung des ihr zugeordneten Prozessmoduls zu verwerten. Insbesondere können verschiedene Prozessparameter eines von einem nachfolgenden Prozessmodul durchzuführenden Prozessabschnitts in Abhängigkeit der Informationen eines ein Zwischenprodukt herstellenden vorhergehenden Prozessmoduls variiert werden.

Erfindungsgemäß ist wenigstens ein Prozessmodul modular ausgebildet und umfasst mindestens zwei prozesstechnisch miteinander verbindbare Prozessuntermodule. Vorteilhafterweise ist die elektronische Einrichtung des modular aufgebauten Prozessmoduls eingerichtet ist, vor Beginn des von dem Prozessmodul durchzuführenden Prozessabschnitts über das Kommunikationsnetz zu erfassen, ob das Prozessmodul für den mit dem Prozessmodul durchzuführenden Prozessabschnitt geeignete Prozessuntermodule umfasst. Beispielsweise kann hierbei erfasst werden, ob alle für die Durchführung eines bestimmten Prozessabschnitts erforderlichen Prozessuntermodule vorhanden und auf geeignete Art und Weise relativ zueinander angeordnet sind. Des Weiteren kann erfasst werden, ob die zur Durchführung des bestimmten Prozessabschnitts erforderlichen Verfahrensbedingungen durch ein Prozessuntermodul eingehalten werden können.

Vorzugsweise sind die Prozessuntermodule zur Ausbildung eines Prozessmoduls in einen einfachen Transport des jeweiligen Prozessmoduls ermöglichenden Gehäuse angeordnet, wobei die Gehäusedimensionierung standardisiert sein kann.

Nach einer weiteren vorteilhaften Ausgestaltung ist die elektronische Einrichtung eines Prozessmoduls eingerichtet, vor Beginn des von dem Prozessmodul durchzuführenden Prozessabschnitts über das Kommunikationsnetz Informationen über den jeweiligen Zustand der Prozessuntermodule zu erfassen. Als Zustand kommt hierbei beispielsweise der Wartungszustand eines Prozessuntermoduls und/oder dessen Zertifizierung nach Durchführung einer technischen Sicherheitskontrolle in Betracht, in der überprüft wird, ob der Zustand des jeweiligen Prozessuntermoduls gesetzlichen Vorgaben oder ähnlichem genügt.

Es wird weiter als vorteilhaft erachtet, wenn die Produktionsanlage eine übergeordnete Steuer- und/oder Regeleinrichtung aufweist, die kommunikationstechnisch mit dem Kommunikationsnetz verbindbar ist, wobei die übergeordnete Steuer- und/oder Regeleinrichtung dazu eingerichtet ist, automatisch Informationen von mit dem Kommunikationsnetz verbundenen Prozessmodulen abzufragen, wobei die von der übergeordneten Steuer- und/oder Regeleinrichtung abfragbaren Informationen zumindest einerseits Informationen in Form von Grundfunktionen und/oder Spezialfunktionen des jeweiligen Prozessmoduls bezüglich der mit dem jeweiligen Prozessmodul durchführbaren Grundprozesse bzw. Spezialprozesse und/oder andererseits Informationen in Form von gegebenen und/oder zu erwartenden Prozessparametern bezüglich des von dem diese Informationen zur Verfügung stellenden Prozessmodul durchgeführten bzw. durchzuführenden Prozessabschnitts umfassen. Die übergeordnete Steuer- und/oder Regeleinrichtung ist vorzugsweise an dem jeweiligen Produktionsort, an dem eine Produktionsanlage aufgebaut werden soll, fest installiert und verbleibt dort auch nach einem beschriebenen Austausch von Prozessmodulen für die Herstellung verschiedener Produkte an demselben Produktionsort. Die übergeordnete Steuer- und/oder Regeleinrichtung kann eine Überwachungsfunktion haben, indem beispielsweise abgefragte Prozessparameter bezüglich ihrer Konformität mit erlaubten Prozessparameterbereichen überwacht werden. Falls dies nicht der Fall ist, kann die Produktionsanlage mittels der übergeordneten Steuer- und/oder Regeleinrichtung vorübergehend stillgelegt werden. Auf der anderen Seite ist es auch möglich, dass die übergeordnete Steuer- und/oder Regeleinrichtung teilweise aktiv in die Produktion eingreift, ohne dass die Produktion angehalten wird.

Eine weitere vorteilhafte Ausgestaltung sieht vor, dass jede elektronische Einrichtung eines Prozessmoduls derart eingerichtet ist, dass die Spezialfunktionen des jeweiligen Prozessmoduls konfigurierbar sind, wobei die übergeordnete Steuer- und/oder Regeleinrichtung eingerichtet ist, auf Basis der von mit dem Kommunikationsnetz verbundenen Prozessmodulen abgefragten Informationen einzelne elektronische Einrichtungen von Prozessmodulen zur Durchführung der Produktion produktionsspezifisch zu konfigurieren. Mit Prozessmodulen einer bestimmten Gattung lassen sich in der Regel verschiedene Prozesse realisieren. Auch kann ein und derselbe Prozess unter verschiedenen Randbedingungen durchgeführt werden. Hierzu kann über eine produktionsspezifische Konfiguration einer Spezialfunktion eines Prozessmoduls, beispielsweise eine Variation von Prozessparametern innerhalb von maximal möglichen Parameterbereichen durchgeführt werden. Die Konfigurierung einzelner Spezialfunktionen von Prozessmodulen ermöglicht somit einen sehr variablen Einsatz der Prozessmodule.

Es wird weiter vorgeschlagen, dass die übergeordnete Steuer- und/oder Regeleinrichtung eingerichtet ist, vor Beginn der jeweilig von der Produktionsanlage durchzuführenden Produktion über das Kommunikationsnetz zu erfassen, ob die Produktionsanlage für die mit der Produktionsanlage durchzuführende Produktion geeignete Prozessmodule umfasst. Dies kann zusätzlich oder alternativ zu der oben beschriebenen entsprechenden Erfassung durch die elektronische Einrichtung eines Prozessmoduls erfolgen.

Nach einer weiteren vorteilhaften Ausgestaltung weist jedes Prozessuntermodul eine untergeordnete elektronische Einrichtung auf, über die das jeweilige Prozessuntermodul kommunikationstechnisch mit dem Kommunikationsnetz verbindbar ist und die dazu eingerichtet ist, dass jeweilige Prozessuntermodul zur eigenständigen Durchführung eines bestimmten Prozessunterabschnitts der Produktion zu steuern und/oder zu regeln, wobei die elektronischen Einrichtungen derart eingerichtet sind, dass kommunikationstechnisch mit dem Kommunikationsnetz verbundene Prozessuntermodule automatisch miteinander und/oder mit mit dem Kommunikationsnetz verbundenen Prozessmodulen kommunizieren können, zumindest derart, dass wenigstens ein Prozessuntermodul automatisch Informationen von zumindest einem weiteren Prozessuntermodul bzw. von zumindest einem Prozessmodul abfragt, wobei die abfragbaren Informationen zumindest Informationen in Form von gegebenen und/oder zu erwartenden Prozessparametern bezüglich des von dem diese Informationen zur Verfügung stellenden Prozessuntermodul durchgeführten bzw. durchzuführenden Prozessunterabschnitts bzw. zumindest Informationen in Form von gegebenen und/oder zu erwartenden Prozessparametern bezüglich des von dem diese Informationen zur Verfügung stellenden Prozessmodul durchgeführten bzw. durchzuführenden Prozessabschnitts umfassen, wobei jede elektronische Einrichtung eines Prozessuntermoduls dazu eingerichtet ist, die von einem weiteren Prozessuntermodul bzw. von einem Prozessmodul erhaltenen Informationen zur Steuerung und/oder Regelung des ihr zugeordneten Prozessuntermoduls zu verwerten. Diese Ausgestaltung ist analog zu der oben beschriebenen Ausgestaltung und Funktion der Prozessmodule gemäß Patentanspruch 1 zu sehen. Informationen können nach dieser Ausgestaltung entweder lediglich innerhalb einer Hierarchieebene zwischen Prozessuntermodulen oder hierarchieunabhängig sowohl zwischen Prozessuntermodulen untereinander als auch zwischen Prozessuntermodulen und Prozessmodulen ausgetauscht werden.

Es wird weiter als vorteilhaft erachtet, wenn die übergeordnete Steuer- und/oder Regeleinrichtung dazu eingerichtet ist, automatisch Informationen von mit dem Kommunikationsnetz verbundenen Prozessuntermodulen abzufragen, wobei die von der übergeordneten Steuer- und/oder Regeleinrichtung abfragbaren Informationen zumindest einerseits Informationen in Form von Grundfunktionen und/oder Spezialfunktionen des jeweiligen Prozessuntermoduls bezüglich der mit dem Prozessuntermodul durchführbaren Grundprozesse bzw. Spezialprozesse und/oder andererseits Informationen in Form von gegebenen und/oder zu erwartenden Prozessparametern bezüglich des von dem diese Informationen zur Verfügung stellenden Prozessuntermodul durchgeführten bzw. durchzuführenden Prozessunterabschnitts umfassen. Die übergeordnete Steuer- und/oder Regeleinrichtung kann auch hierbei eine Überwachungsfunktion haben, indem beispielsweise abgefragte Prozessparameter bezüglich ihrer Konformität mit erlaubten Prozessparameterbereichen überwacht werden. Falls dies nicht der Fall ist, kann die Produktionsanlage mittels der übergeordneten Steuer- und/oder Regeleinrichtung vorübergehend stillgelegt werden. Auf der anderen Seite ist es auch möglich, dass die übergeordnete Steuer- und/oder Regeleinrichtung teilweise aktiv in die Produktion eingreift, ohne dass die Produktion angehalten wird.

Gemäß einer weiteren vorteilhaften Ausgestaltung ist jede elektronische Einrichtung eines Prozessuntermoduls derart eingerichtet, dass die mit dem jeweiligen Prozessuntermodul durchführbaren Spezialprozesse konfigurierbar sind, wobei die übergeordnete Steuer- und/oder Regeleinrichtung eingerichtet ist, auf Basis der von mit dem Kommunikationsnetz verbundenen Prozessuntermodulen bzw. Prozessmodulen abgefragten Informationen einzelne elektronische Einrichtungen von Prozessuntermodulen zur Durchführung der Produktion produktionsspezifisch zu konfigurieren. Mit Prozessuntermodulen einer bestimmten Gattung lassen sich in der Regel verschiedene Prozesse durchführen. Auch kann ein und derselbe Prozess unter verschiedenen Randbedingungen durchgeführt werden. Hierzu kann über eine produktionsspezifische Konfiguration einer Spezialfunktion eines Prozessuntermoduls beispielsweise eine Variation von Prozessparametern innerhalb von maximal möglichen Parameterbereichen durchgeführt werden kann. Die Konfigurierung einzelner Spezialfunktionen von Prozessuntermodulen ermöglicht einen sehr variablen Einsatz der Prozessuntermodule.

Vorteilhafterweise ist die übergeordnete Steuer- und/oder Regeleinrichtung eingerichtet, vor Beginn der von der Produktionsanlage durchzuführenden Produktion über das Kommunikationsnetz Informationen über den jeweiligen Zustand der Prozessuntermodule zu erfassen. Als Zustand kommt auch hierbei beispielsweise der Wartungszustand eines Prozessuntermoduls und/oder dessen Zertifizierung nach Durchführung einer technischen Sicherheitskontrolle in Betracht, in der überprüft wird, ob der Zustand des Prozessuntermoduls gesetzlichen Vorgaben oder ähnlichem genügt.

Eine weitere vorteilhafte Ausgestaltung der Erfindung sieht vor, dass die über das Kommunikationsnetz ausgetauschten Informationen gekapselt sind. Mit einer solchen Datenkapselung ist eine Bündelung bestimmter Informationen möglich, die nur von einem bestimmten Adressaten, beispielsweise einem Prozessuntermodul, einem Prozessmodul oder der übergeordneten Steuer- und/oder Regeleinrichtung, empfangen werden sollen. Dies vereinfacht den Informationsaustausch über das Kommunikationsnetz deutlich.

Ferner wird es als vorteilhaft erachtet, wenn die übergeordnete Steuer- und/oder Regeleinrichtung eingerichtet ist, die jeweiligen Komponenten der Produktionsanlage und/oder von einzelnen Prozessuntermodulen bzw. Prozessmodulen abgefragte Informationen auf einer Darstellungseinrichtung anzuzeigen. Hierdurch kann einer verantwortlichen Person am Produktionsort übersichtlich angezeigt werden, wie die jeweilige Produktionsanlage zusammengesetzt ist bzw. welche Prozessmodule und Prozessuntermodule aktuell an einer bestimmten Produktion beteiligt sind und in welchem Zustand sich die Produktion aktuell befindet. Letzteres lässt sich über von der übergeordneten Steuer- und/oder Regeleinrichtung erfasste Prozessparameter ermitteln. Die entsprechende Darstellung macht eine einfache Sichtkontrolle der Produktion durch eine verantwortliche Person möglich, was sich positiv auf die Betriebssicherheit einer entsprechend ausgebildeten Produktionsanlage auswirkt.

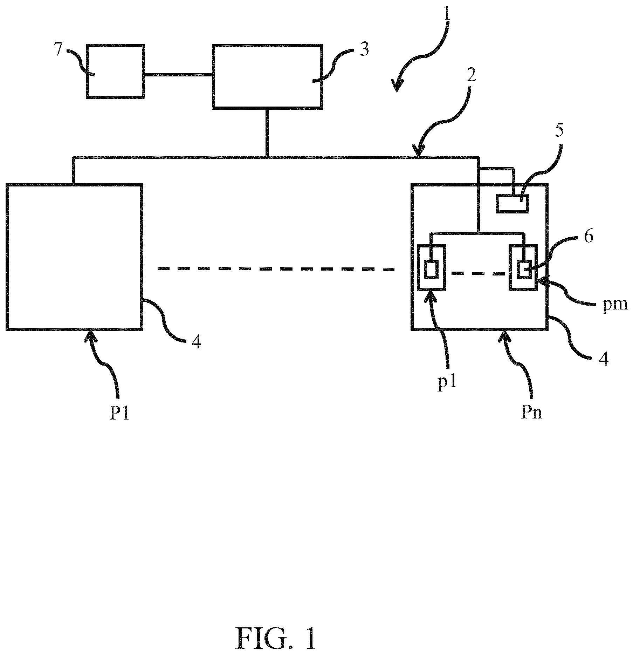

Nachfolgend wird die Erfindung unter Bezugnahme auf die anliegende Figur anhand eines bevorzugten Ausführungsbeispiels exemplarisch erläutert, wobei die nachfolgend dargestellten Merkmale sowohl jeweils für sich genommen als auch in Kombination miteinander einen Aspekt der Erfindung darstellen können. Es zeigt
Figur 1: eine schematische Darstellung eines Ausführungsbeispiels für die erfindungsgemäße Produktionsanlage.

In Figur 1 ist ein Ausführungsbeispiel für eine erfindungsgemäße Produktionsanlage 1 gezeigt. Die Produktionsanlage 1 umfasst n Prozessmodule P1 bis Pn, ein Kommunikationsnetz 2 und eine übergeordnete Steuer- und/oder Regeleinrichtung 3. Prozessmodule P1 bis Pn sind über das Kommunikationsnetz 2 kommunikationstechnisch miteinander und mit der übergeordneten Steuer- und/oder Regeleinrichtung 3 verbunden. Mit der übergeordneten Steuer- und/oder Regeleinrichtung 3 ist eine Darstellungseinrichtung 7 kommunikationstechnisch verbunden.

Jedes Prozessmodul P1 bis Pn ist modular ausgebildet und weist ein Gehäuse 4 auf, in dem m Prozessuntermodule p1 bis pm angeordnet sind, wobei sich die Anzahl der Prozessuntermodule p1 bis pm pro Prozessmodul P1 bis Pn unterscheiden oder gleich sein kann. Des Weiteren umfasst jedes Prozessmodul P1 bis Pn eine in dem Gehäuse 4 angeordnete elektronische Einrichtung 5, über die das jeweilige Prozessmodul P1,..., Pn kommunikationstechnisch mit dem Kommunikationsnetz 2 verbindbar ist und die dazu eingerichtet ist, das jeweilige Prozessmodul P1,..., Pn zur eigenständigen Durchführung eines bestimmten Prozessabschnitts der Produktion zu steuern und/oder zu regeln. Die elektronischen Einrichtungen 5 sind derart eingerichtet, dass kommunikationstechnisch mit dem Kommunikationsnetz 2 verbundene Prozessmodule P1,..., Pn automatisch miteinander kommunizieren können, zumindest derart, dass wenigstens ein Prozessmodul P1,..., Pn automatisch Informationen von zumindest einem weiteren Prozessmodul P1,..., Pn abfragt, wobei die abfragbaren Informationen zumindest Informationen in Form von gegebenen und/oder zu erwartenden Prozessparametern bezüglich des von dem diese Informationen zur Verfügung stellenden Prozessmodul P1,..., Pn durchgeführten bzw. durchzuführenden Prozessabschnitts umfassen, wobei jede elektronische Einrichtung 5 eines Prozessmoduls P1,..., Pn dazu eingerichtet ist, die von einem weiteren Prozessmodul P1,..., Pn erhaltenen Informationen zur Steuerung und/oder Regelung des ihr zugeordneten Prozessmoduls P1,..., Pn zu verwerten.

Die Prozessuntermodule pl,..., pm sind produktionstechnisch und kommunikationstechnisch über das Kommunikationsnetz 2 miteinander verbunden. Die elektronische Einrichtung 5 jedes modular aufgebauten Prozessmoduls P1,..., Pn ist eingerichtet, vor Beginn des von dem Prozessmodul P1,..., Pn durchzuführenden Prozessabschnitts über das Kommunikationsnetz 2 zu erfassen, ob das Prozessmodul P1,..., Pn für den mit dem Prozessmodul P1,..., Pn durchzuführenden Prozessabschnitt geeignete Prozessuntermodule p1,..., pm umfasst. Die elektronische Einrichtung 5 jedes Prozessmoduls P1,..., Pn ist weiter eingerichtet, vor Beginn des von dem Prozessmodul P1,..., Pn durchzuführenden Prozessabschnitts über das Kommunikationsnetz 2 Informationen über den jeweiligen Zustand der Prozessuntermodule p1,..., pm zu erfassen.

Jedes Prozessuntermodul p1,..., pm weist eine untergeordnete elektronische Einrichtung 6 auf, über die das jeweilige Prozessuntermodul p1,..., pm kommunikationstechnisch mit dem Kommunikationsnetz 2 verbindbar ist und die dazu eingerichtet ist, dass jeweilige Prozessuntermodul p1,..., pm zur eigenständigen Durchführung eines bestimmten Prozessunterabschnitts der Produktion zu steuern und/oder zu regeln. Die untergeordneten elektronischen Einrichtungen 6 sind derart eingerichtet, dass kommunikationstechnisch mit dem Kommunikationsnetz 2 verbundene Prozessuntermodule p1,..., pm automatisch miteinander und/oder mit mit dem Kommunikationsnetz 2 verbundenen Prozessmodulen P1,..., Pn kommunizieren können, zumindest derart, dass wenigstens ein Prozessuntermodul p1,..., pm automatisch Informationen von zumindest einem weiteren Prozessuntermodul p1,..., pm bzw. von zumindest einem Prozessmodul P1,..., Pn abfragt, wobei die abfragbaren Informationen zumindest Informationen in Form von gegebenen und/oder zu erwartenden Prozessparametern bezüglich des von dem diese Informationen zur Verfügung stellenden Prozessuntermodul p1,..., pm durchgeführten bzw. durchzuführenden Prozessunterabschnitts bzw. zumindest Informationen in Form von gegebenen und/oder zu erwartenden Prozessparametern bezüglich des von dem diese Informationen zur Verfügung stellenden Prozessmodul P1,..., Pn durchgeführten bzw. durchzuführenden Prozessabschnitts umfassen, wobei jede elektronische Einrichtung 6 eines Prozessuntermoduls p1,..., pm dazu eingerichtet ist, die von einem weiteren Prozessuntermodul p1,..., pm bzw. von einem Prozessmodul P1,..., Pn erhaltenen Informationen zur Steuerung und/oder Regelung des ihr zugeordneten Prozessuntermoduls p1,..., pm zu verwerten.

Die übergeordnete Steuer- und/oder Regeleinrichtung 3 ist kommunikationstechnisch mit dem Kommunikationsnetz 2 verbunden und dazu eingerichtet, automatisch Informationen von mit dem Kommunikationsnetz 2 verbundenen Prozessmodulen P1,..., Pn abzufragen, wobei die von der übergeordneten Steuer- und/oder Regeleinrichtung 3 abfragbaren Informationen zumindest einerseits Informationen in Form von Grundfunktionen und/oder Spezialfunktionen des jeweiligen Prozessmoduls P1,..., Pn bezüglich der mit dem jeweiligen Prozessmodul P1,..., Pn durchführbaren Grundprozesse bzw. Spezialprozesse und/oder andererseits Informationen in Form von gegebenen und/oder zu erwartenden Prozessparametern bezüglich des von dem diese Informationen zur Verfügung stellenden Prozessmodul P1,..., Pn durchgeführten bzw. durchzuführenden Prozessabschnitts umfassen. Jede elektronische Einrichtung 5 eines Prozessmoduls P1,..., Pn ist hierbei derart eingerichtet, dass die Spezialfunktionen des jeweiligen Prozessmodul P1,..., Pn konfigurierbar sind, wobei die übergeordnete Steuer- und/oder Regeleinrichtung P1,..., Pn eingerichtet ist, auf Basis der von mit dem Kommunikationsnetz 2 verbundenen Prozessmodulen P1,..., Pn abgefragten Informationen einzelne elektronische Einrichtungen 5 von Prozessmodulen P1,..., Pn zur Durchführung der Produktion produktionsspezifisch zu konfigurieren.

Die übergeordnete Steuer- und/oder Regeleinrichtung 3 ist des Weiteren eingerichtet, vor Beginn der jeweilig von der Produktionsanlage 1 durchzuführenden Produktion über das Kommunikationsnetz 2 zu erfassen, ob die Produktionsanlage 1 für die mit der Produktionsanlage 1 durchzuführende Produktion geeignete Prozessmodule P1,..., Pn umfasst.

Des Weiteren ist die übergeordnete Steuer- und/oder Regeleinrichtung 3 dazu eingerichtet, automatisch Informationen von mit dem Kommunikationsnetz 2 verbundenen Prozessuntermodulen p1,..., pm abzufragen, wobei die von der übergeordneten Steuer- und/oder Regeleinrichtung 3 abfragbaren Informationen zumindest einerseits Informationen in Form Grundfunktionen und/oder Spezialfunktionen des jeweiligen Prozessuntermoduls p1,..., pm bezüglich der mit dem Prozessuntermodul p1,..., pm durchführbaren Grundprozesse bzw. Spezialprozesse und/oder andererseits Informationen in Form von gegebenen und/oder zu erwartenden Prozessparametern bezüglich des von dem diese Informationen zur Verfügung stellenden Prozessuntermodul p1,..., pm durchgeführten bzw. durchzuführenden Prozessunterabschnitts umfassen. Hierbei ist jede elektronische Einrichtung 6 eines Prozessuntermoduls p1,..., pm derart eingerichtet, dass die mit dem jeweiligen Prozessuntermodul p1,..., pm durchführbaren Spezialprozesse konfigurierbar sind, wobei die übergeordnete Steuer- und/oder Regeleinrichtung 3 eingerichtet ist, auf Basis der von mit dem Kommunikationsnetz 2 verbundenen Prozessuntermodulen p1,..., pm bzw. Prozessmodulen P1,..., Pn abgefragten Informationen einzelne elektronische Einrichtungen 6 von Prozessuntermodulen p1,..., pm zur Durchführung der Produktion produktionsspezifisch zu konfigurieren.

Die übergeordnete Steuer- und/oder Regeleinrichtung 3 ist überdies eingerichtet, vor Beginn der von der Produktionsanlage 1 durchzuführenden Produktion über das Kommunikationsnetz 2 Informationen über den jeweiligen Zustand der Prozessuntermodule p1,..., pm zu erfassen.

Ferner ist die übergeordnete Steuer- und/oder Regeleinrichtung 3 eingerichtet, die jeweiligen Komponenten der Produktionsanlage 1 und/oder von einzelnen Prozessuntermodulen p1,..., pm bzw. Prozessmodulen P1,..., Pn abgefragte Informationen auf der Darstellungseinrichtung 7 anzuzeigen.

## Patentansprüche

1. Produktionsanlage (1) für die Produktion eines chemischen und/oder pharmazeutischen Produktes, aufweisend wenigstens zwei produktionstechnisch miteinander verbindbare Prozessmodule (P1,..., Pn) und ein Kommunikationsnetz (2), wobei jedes Prozessmodul (P1,..., Pn) eine elektronische Einrichtung (5), insbesondere Steuer- und/oder Regeleinrichtung, aufweist, über die das jeweilige Prozessmodul (P1,..., Pn) kommunikationstechnisch mit dem Kommunikationsnetz (2) verbindbar ist und die dazu eingerichtet ist, das jeweilige Prozessmodul (P1,..., Pn) zur eigenständigen Durchführung eines bestimmten Prozessabschnitts der Produktion zu steuern und/oder zu regeln, wobei die elektronischen Einrichtungen (5) derart eingerichtet sind, dass kommunikationstechnisch mit dem Kommunikationsnetz (2) verbundene Prozessmodule (P1,..., Pn) automatisch miteinander kommunizieren können, zumindest derart, dass wenigstens ein Prozessmodul (P1,..., Pn) automatisch Informationen von zumindest einem weiteren Prozessmodul (P1,..., Pn) abfragt, wobei die abfragbaren Informationen zumindest Informationen in Form von gegebenen und/oder zu erwartenden Prozessparametern bezüglich des von dem diese Informationen zur Verfügung stellenden Prozessmodul (P1,..., Pn) durchgeführten bzw. durchzuführenden Prozessabschnitts umfassen, wobei jede elektronische Einrichtung (5) eines Prozessmoduls (P1,..., Pn) dazu eingerichtet ist, die von einem weiteren Prozessmodul (P1,..., Pn) erhaltenen Informationen zur Steuerung und/oder Regelung des ihr zugeordneten Prozessmoduls (P1,..., Pn) zu verwerten, wobei wenigstens ein Prozessmodul (P1,..., Pn) modular ausgebildet ist und ein einen einfachen Transport des Prozessmoduls (P1,..., Pn) ermöglichendes Gehäuse (4) und zumindest zwei zur Durchführung des gewünschten Prozessabschnitts geeignete sowie prozesstechnisch miteinander und kommunikationstechnisch mit dem Kommunikationsnetz (2) verbindbare Prozessuntermodule (p1,..., pm) umfasst, die in dem Gehäuse (4) angeordnet sind.

2. Produktionsanlage (1) nach Anspruch 1, **dadurch gekennzeichnet, dass** die elektronische Einrichtung (5) des modular aufgebauten Prozessmoduls (P1,..., Pn) eingerichtet ist, vor Beginn des von dem Prozessmodul (P1,..., Pn) durchzuführenden Prozessabschnitts über das Kommunikationsnetz (2) zu erfassen, ob das Prozessmodul (P1,..., Pn) für den mit dem Prozessmodul (P1,..., Pn) durchzuführenden Prozessabschnitt geeignete Prozessuntermodule (p1,..., pm) umfasst.

3. Produktionsanlage (1) nach Anspruch 2, **dadurch gekennzeichnet, dass** die elektronische Einrichtung (5) eines Prozessmoduls (P1,..., Pn) eingerichtet ist, vor Beginn des von dem Prozessmodul (P1,..., Pn) durchzuführenden Prozessabschnitts über das Kommunikationsnetz (2) Informationen über den jeweiligen Zustand der Prozessuntermodule (p1,..., pm) zu erfassen.

4. Produktionsanlage (1) nach einem der vorhergehenden Ansprüche, **gekennzeichnet durch** eine übergeordnete Steuer- und/oder Regeleinrichtung (3), die kommunikationstechnisch mit dem Kommunikationsnetz (2) verbindbar ist, wobei die übergeordnete Steuer- und/oder Regeleinrichtung (3) dazu eingerichtet ist, automatisch Informationen von mit dem Kommunikationsnetz (2) verbundenen Prozessmodulen (P1,..., Pn) abzufragen, wobei die von der übergeordneten Steuer- und/oder Regeleinrichtung (3) abfragbaren Informationen zumindest einerseits Informationen in Form Grundfunktionen und/oder Spezialfunktionen des jeweiligen Prozessmoduls (P1,..., Pn) bezüglich der mit dem jeweiligen Prozessmodul (P1,..., Pn) durchführbaren Grundprozesse bzw. Spezialprozesse und/oder andererseits Informationen in Form von gegebenen und/oder zu erwartenden Prozessparametern bezüglich des von dem diese Informationen zur Verfügung stellenden Prozessmodul (P1,..., Pn) durchgeführten bzw. durchzuführenden Prozessabschnitts umfassen.

5. Produktionsanlage (1) nach Anspruch 4, **dadurch gekennzeichnet, dass** jede elektronische Einrichtung (5) eines Prozessmoduls (P1,..., Pn) derart eingerichtet ist, dass die Spezialfunktionen des jeweiligen Prozessmodul (P1,..., Pn) konfigurierbar sind, wobei die übergeordnete Steuer- und/oder Regeleinrichtung (3) eingerichtet ist, auf Basis der von mit dem Kommunikationsnetz (2) verbundenen Prozessmodulen (P1,..., Pn) abgefragten Informationen einzelne elektronische Einrichtungen (5) von Prozessmodulen (P1,..., Pn) zur Durchführung der Produktion produktionsspezifisch zu konfigurieren.

6. Produktionsanlage (1) nach Anspruch 4 oder 5, **dadurch gekennzeichnet, dass** die übergeordnete Steuer- und/oder Regeleinrichtung (3) eingerichtet ist, vor Beginn der jeweilig von der Produktionsanlage (1) durchzuführenden Produktion über das Kommunikationsnetz (2) zu erfassen, ob die Produktionsanlage (1) für die mit der Produktionsanlage (1) durchzuführende Produktion geeignete Prozessmodule (P1,..., Pn) umfasst.

7. Produktionsanlage (1) nach einem der Ansprüche 2 bis 6, **dadurch gekennzeichnet, dass** jedes Prozessuntermodul (p1,..., pm) eine untergeordnete elektronische Einrichtung (6) aufweist, über die das jeweilige Prozessuntermodul (p1,..., pm) kommunikationstechnisch mit dem Kommunikationsnetz (2) verbindbar ist und die dazu eingerichtet ist, dass jeweilige Prozessuntermodul (p1,..., pm) zur eigenständigen Durchführung eines bestimmten Prozessunterabschnitts der Produktion zu steuern und/oder zu regeln, wobei die untergeordneten elektronischen Einrichtungen (6) derart eingerichtet sind, dass kommunikationstechnisch mit dem Kommunikationsnetz (2) verbundene Prozessuntermodule (p1,..., pm) automatisch miteinander und/oder mit mit dem Kommunikationsnetz (2) verbundenen Prozessmodulen (P1,..., Pn) kommunizieren können, zumindest derart, dass wenigstens ein Prozessuntermodul (p1,..., pm) automatisch Informationen von zumindest einem weiteren Prozessuntermodul (p1,..., pm) bzw. von zumindest einem Prozessmodul (P1,..., Pn) abfragt, wobei die abfragbaren Informationen zumindest Informationen in Form von gegebenen und/oder zu erwartenden Prozessparametern bezüglich des von dem diese Informationen zur Verfügung stellenden Prozessuntermodul (p1,..., pm) durchgeführten bzw. durchzuführenden Prozessunterabschnitts bzw. zumindest Informationen in Form von gegebenen und/oder zu erwartenden Prozessparametern bezüglich des von dem diese Informationen zur Verfügung stellenden Prozessmodul (P1,..., Pn) durchgeführten bzw. durchzuführenden Prozessabschnitts umfassen, wobei jede elektronische Einrichtung (6) eines Prozessuntermoduls (p1,..., pm) dazu eingerichtet ist, die von einem weiteren Prozessuntermodul (p1,..., pm) bzw. von einem Prozessmodul (P1,..., Pn) erhaltenen Informationen zur Steuerung und/oder Regelung des ihr zugeordneten Prozessuntermoduls (p1,..., pm) zu verwerten.

8. Produktionsanlage (1) nach Anspruch 7, **dadurch gekennzeichnet, dass** die übergeordnete Steuer- und/oder Regeleinrichtung (3) dazu eingerichtet ist, automatisch Informationen von mit dem Kommunikationsnetz (2) verbundenen Prozessuntermodulen (p1,..., pm) abzufragen, wobei die von der übergeordneten Steuer- und/oder Regeleinrichtung (3) abfragbaren Informationen zumindest einerseits Informationen in Form Grundfunktionen und/oder Spezialfunktionen des jeweiligen Prozessuntermoduls (p1,..., pm) bezüglich der mit dem Prozessuntermodul (p1,..., pm) durchführbaren Grundprozesse bzw. Spezialprozesse und/oder andererseits Informationen in Form von gegebenen und/oder zu erwartenden Prozessparametern bezüglich des von dem diese Informationen zur Verfügung stellenden Prozessuntermodul (p1,..., pm) durchgeführten bzw. durchzuführenden Prozessunterabschnitts umfassen.

9. Produktionsanlage (1) nach Anspruch 8, **dadurch gekennzeichnet, dass** jede elektronische Einrichtung (6) eines Prozessuntermoduls (p1,..., pm) derart eingerichtet ist, dass die mit dem jeweiligen Prozessuntermodul (p1,..., pm) durchführbaren Spezialprozesse konfigurierbar sind, wobei die übergeordnete Steuer- und/oder Regeleinrichtung (3) eingerichtet ist, auf Basis der von mit dem Kommunikationsnetz (2) verbundenen Prozessuntermodulen (p1,..., pm) bzw. Prozessmodulen (P1,..., Pn) abgefragten Informationen einzelne elektronische Einrichtungen (6) von Prozessuntermodulen (p1,..., pm) zur Durchführung der Produktion produktionsspezifisch zu konfigurieren.

10. Produktionsanlage (1) nach einem der Ansprüche 8 oder 9, **dadurch gekennzeichnet, dass** die übergeordnete Steuer- und/oder Regeleinrichtung (3) eingerichtet ist, vor Beginn der von der Produktionsanlage (1) durchzuführenden Produktion über das Kommunikationsnetz (2) Informationen über den jeweiligen Zustand der Prozessuntermodule (p1,..., pm) zu erfassen.

11. Produktionsanlage (1) nach einem der vorhergehenden Ansprüche, **dadurch gekennzeichnet, dass** die über das Kommunikationsnetz (2) ausgetauschten Informationen gekapselt sind.

12. Produktionsanlage (1) nach einem der vorhergehenden Ansprüche, **dadurch gekennzeichnet, dass** die übergeordnete Steuer- und/oder Regeleinrichtung (3) eingerichtet ist, die jeweiligen Komponenten der Produktionsanlage (1) und/oder von einzelnen Prozessuntermodulen (p1,..., pm) bzw. Prozessmodulen (P1,..., Pn) abgefragte Informationen auf einer Darstellungseinrichtung anzuzeigen.

## Claims

1. Production plant (1) for producing a chemical and/or pharmaceutical product, having at least two process modules (P1,..., Pn), which can be connected to one another for production purposes, and a communication network (2), wherein each process module (P1,..., Pn) has an electronic device (5), in particular a control and/or regulating device, which can be used to connect the respective process module (P1,..., Pn) to the communication network (2) for communication purposes and is set up to control and/or regulate the respective process module (P1,..., Pn) to independently carry out a particular process section of production, wherein the electronic devices (5) are set up in such a manner that process modules (P1,..., Pn) connected to the communication network (2) for communication purposes can automatically communicate with one another at least in such a manner that at least one process module (P1,..., Pn) automatically requests information from at least one further process module (P1,..., Pn), wherein the requestable information comprises at least information in the form of given and/or expected process parameters with regard to the process section carried out or to be carried out by the process module (P1,..., Pn) providing this information, wherein each electronic device (5) of a process module (P1,..., Pn) is set up to use the information obtained from a further process module (P1,..., Pn) to control and/or regulate the process module (P1,..., Pn) assigned to it, wherein at least one process module (P1,..., Pn) is modular and comprises a housing (4) allowing simple transport of the process module (P1,..., Pn) and at least two process submodules (p1,..., pm) which are suitable for carrying out the desired process section, can be connected to one another for process engineering purposes and can be connected to the communication network (2) for communication purposes, and are arranged in the housing (4).

2. Production plant (1) according to Claim 1, **characterized in that** the electronic device (5) of the modular process module (P1,..., Pn) is set up, before the start of the process section to be carried out by the process module (P1,..., Pn), to detect, via the communication network (2), whether the process module (P1,..., Pn) comprises process submodules (p1,..., pm) which are suitable for the process section to be carried out using the process module (P1,..., Pn).

3. Production plant (1) according to Claim 2, **characterized in that** the electronic device (5) of a process module (P1,..., Pn) is set up, before the start of the process section to be carried out by the process module (P1,..., Pn), to acquire information relating to the respective state of the process submodules (p1,..., pm) via the communication network (2).

4. Production plant (1) according to one of the preceding claims, **characterized by** a superordinate control and/or regulating device (3) which can be connected to the communication network (2) for communication purposes, wherein the superordinate control and/or regulating device (3) is set up to automatically request information from process modules (P1,..., Pn) connected to the communication network (2), wherein the information which can be requested by the superordinate control and/or regulating device (3) comprises at least, on the one hand, information in the form of basic functions and/or special functions of the respective process module (P1,..., Pn) with respect to the basic processes and/or special processes which can be carried out using the respective process module (P1,..., Pn) and/or, on the other hand, information in the form of given and/or expected process parameters with respect to the process section carried out or to be carried out by the process module (P1,..., Pn) providing this information.

5. Production plant (1) according to Claim 4, **characterized in that** each electronic device (5) of a process module (P1,..., Pn) is set up in such a manner that the special functions of the respective process module (P1,..., Pn) can be configured, wherein the superordinate control and/or regulating device (3) is set up to configure individual electronic devices (5) of process modules (P1,..., Pn) to carry out production in a production-specific manner on the basis of the information requested from process modules (P1,..., Pn) connected to the communication network (2).

6. Production plant (1) according to Claim 4 or 5, **characterized in that** the superordinate control and/or regulating device (3) is set up, before the start of the production to be respectively carried out by the production plant (1), to detect, via the communication network (2), whether the production plant (1) comprises process modules (P1,..., Pn) suitable for the production to be carried out using the production plant (1).

7. Production plant (1) according to one of Claims 2 to 6, **characterized in that** each process submodule (p1,..., pm) has a subordinate electronic device (6) which can be used to connect the respective process submodule (p1,..., pm) to the communication network (2) for communication purposes and is set up to control and/or regulate the respective process submodule (p1,..., pm) to independently carry out a particular process subsection of production, wherein the subordinate electronic devices (6) are set up in such a manner that process submodules (p1,..., pm) connected to the communication network (2) for communication purposes can automatically communicate with one another and/or with process modules (P1,..., Pn) connected to the communication network (2) at least in such a manner that at least one process submodule (p1,..., pm) automatically requests information from at least one further process submodule (p1,..., pm) or from at least one process module (P1,..., Pn), wherein the requestable information comprises at least information in the form of given and/or expected process parameters with respect to the process subsection carried out or to be carried out by the process submodule (p1,..., pm) providing this information or at least information in the form of given and/or expected process parameters with respect to the process section carried out or to be carried out by the process module (P1,..., Pn) providing this information, wherein each electronic device (6) of a process submodule (p1,..., pm) is set up to use the information obtained from a further process submodule (p1,..., pm) or from a process module (P1,..., Pn) to control and/or regulate the process submodule (p1,..., pm) assigned to it.

8. Production plant (1) according to Claim 7, **characterized in that** the superordinate control and/or regulating device (3) is set up to automatically request information from process submodules (p1,..., pm) connected to the communication network (2), wherein the information which can be requested by the superordinate control and/or regulating device (3) comprises at least, on the one hand, information in the form of basic functions and/or special functions of the respective process submodule (p1,..., pm) with respect to the basic processes and/or special processes which can be carried out using the process submodule (p1,..., pm) and/or, on the other hand, information in the form of given and/or expected process parameters with respect to the process subsection carried out or to be carried out by the process submodule (p1,..., pm) providing this information.

9. Production plant (1) according to Claim 8, **characterized in that** each electronic device (6) of a process submodule (p1,..., pm) is set up in such a manner that the special processes which can be carried out using the respective process submodule (p1,..., pm) can be configured, wherein the superordinate control and/or regulating device (3) is set up to configure individual electronic devices (6) of process submodules (p1,..., pm) to carry out production in a production-specific manner on the basis of the information requested from process submodules (p1,..., pm) or process modules (P1,..., Pn) connected to the communication network (2).

10. Production plant (1) according to either of Claims 8 and 9, **characterized in that** the superordinate control and/or regulating device (3) is set up, before the start of the production to be carried out by the production plant (1), to acquire information relating to the respective state of the process submodules (p1,..., pm) via the communication network (2).

11. Production plant (1) according to one of the preceding claims, **characterized in that** the information interchanged via the communication network (2) is encapsulated.

12. Production plant (1) according to one of the preceding claims, **characterized in that** the superordinate control and/or regulating device (3) is set up to display the respective components of the production plant (1) and/or information requested from individual process submodules (p1,..., pm) or process modules (P1,..., Pn) on a display device.

## Revendications

1. Installation de production (1) pour la production d'un produit chimique et/ou pharmaceutique, comprenant au moins deux modules de processus (P1, ..., Pn) qui peuvent être reliés entre eux de manière productique et un réseau de communication (2), chaque module de processus (P1, ..., Pn) possédant un dispositif électronique (5), notamment un dispositif de commande et/ou de régulation, par le biais duquel le module de processus (P1, ..., Pn) respectif peut être relié en technique de communication au réseau de communication (2) et qui est conçu pour commander et/ou pour réguler le module de processus (P1, ..., Pn) respectif en vue d'une exécution autonome d'une portion de processus déterminée de la production, les dispositifs électroniques (5) étant conçus de telle sorte que des modules de processus (P1, ..., Pn) reliés en technique de communication au réseau de communication (2) peuvent communiquer automatiquement entre eux, au moins de telle sorte qu'au moins un module de processus (P1, ..., Pn) interroge automatiquement des informations auprès d'au moins un module de processus (P1, ..., Pn) supplémentaire, les informations interrogeables comprenant au moins des informations sous la forme de paramètres de processus donnés et/ou à attendre concernant la portion de processus exécutée ou à exécuter par le module de processus (P1, ..., Pn) qui met ces informations à disposition, chaque dispositif électronique (5) d'un module de processus (P1, ..., Pn) étant conçu pour exploiter les informations obtenues de la part d'un module de processus (P1, ..., Pn) supplémentaire pour commander et/ou réguler le module de processus (P1, ..., Pn) qui lui est associé, au moins un module de processus (P1, ..., Pn) étant de configuration modulaire et comportant un boîtier (4) qui rend possible un transport aisé du module de processus (P1, ..., Pn) et au moins deux sous-modules de processus (p1, ..., pm), adaptés pour l'exécution de la portion de processus souhaitée et pouvant être reliés de manière productique entre eux et aussi en technique de communication au réseau de communication (2), qui sont disposés dans le boîtier (4).

2. Installation de production (1) selon la revendication 1, **caractérisée en ce que** le dispositif électronique (5) du module de processus (P1, ..., Pn) de construction modulaire est conçu pour, avant le début de la portion de processus à exécuter par le module de processus (P1, ..., Pn), détecter par le biais du réseau de communication (2) si le module de processus (P1, ..., Pn) comporte des sous-modules de processus (p1, ..., pm) adaptés pour la portion de processus à exécuter par le module de processus (P1, ..., Pn).

3. Installation de production (1) selon la revendication 2, **caractérisée en ce que** le dispositif électronique (5) d'un module de processus (P1, ..., Pn) est conçu pour, avant le début de la portion de processus à exécuter par le module de processus (P1, ..., Pn), acquérir par le biais du réseau de communication (2) des informations à propos de l'état respectif des sous-modules de processus (p1, ..., pm).

4. Installation de production (1) selon l'une des revendications précédentes, **caractérisée par** un dispositif de commande et/ou de régulation (3) de niveau supérieur, qui peut être relié en technique de communication au réseau de communication (2), le dispositif de commande et/ou de régulation (3) de niveau supérieur étant conçu pour interroger automatiquement des informations auprès des modules de processus (P1, ..., Pn) reliés au réseau de communication (2), les informations interrogeables par le dispositif de commande et/ou de régulation (3) de niveau supérieur comprenant au moins d'une part des informations sous la forme de fonctions de base et/ou de fonctions spéciales du module de processus (P1, ..., Pn) respectif concernant des processus de base ou des processus spéciaux exécutables par le module de processus (P1, ..., Pn) respectif et/ou, d'autre part, des informations sous la forme de paramètres de processus donnés et/ou à attendre concernant la portion de processus exécutée ou à exécuter par le module de processus (P1, ..., Pn) qui met ces informations à disposition.

5. Installation de production (1) selon la revendication 4, **caractérisée en ce que** chaque dispositif électronique (5) d'un module de processus (P1, ..., Pn) est conçu de telle sorte que les fonctions spéciales du module de processus (P1, ..., Pn) respectif sont configurables, le dispositif de commande et/ou de régulation (3) de niveau supérieur étant conçu pour configurer spécifiquement au produit des dispositifs électroniques (5) individuels des modules de processus (P1, ..., Pn) en vue d'exécuter la production en se basant sur les informations interrogées auprès des modules de processus (P1, ..., Pn) reliés au réseau de communication (2) .

6. Installation de production (1) selon la revendication 4 ou 5, **caractérisée en ce que** le dispositif de commande et/ou de régulation (3) de niveau supérieur est configuré pour, avant le début de la production respective à exécuter par l'installation de production (1), détecter par le biais du réseau de communication (2) si l'installation de production (1) comprend des modules de processus (P1, ..., Pn) adaptés pour la production à exécuter avec l'installation de production (1).

7. Installation de production (1) selon l'une des revendications 2 à 6, **caractérisée en ce que** chaque sous-module de processus (p1, ..., pm) possède un dispositif électronique subordonné (6), par le biais duquel le sous-module de processus (p1, ..., pm) respectif peut être relié en technique de communication au réseau de communication (2) et qui est conçu pour commander et/ou pour réguler le sous-module de processus (p1, ..., pm) respectif en vue de l'exécution autonome d'une sous-portion de processus déterminée de la production, les dispositifs électroniques subordonnés (6) étant conçus de telle sorte que les sous-modules de processus (p1, ..., pm) reliés en technique de communication au réseau de communication (2) peuvent communiquer automatiquement entre eux et/ou avec des modules de processus (P1, ..., Pn) reliés au réseau de communication (2), au moins de telle sorte qu'au moins un sous-module de processus (p1, ..., pm) interroge automatiquement des informations auprès d'au moins un sous-module de processus (p1, ..., pm) supplémentaire ou auprès d'au moins un module de processus (P1, ..., Pn), les informations interrogeables comprenant au moins des informations sous la forme de paramètres de processus donnés et/ou à attendre concernant la sous-portion de processus exécutée ou à exécuter par le sous-module de processus (p1, ..., pm) qui met ces informations à disposition ou au moins des informations sous la forme de paramètres de processus donnés et/ou à attendre concernant la portion de processus exécutée ou à exécuter par le module de processus (P1, ..., Pn) qui met ces informations à disposition, chaque dispositif électronique (6) d'un sous-module de processus (p1, ..., pm) étant conçu pour exploiter les informations obtenues de la part d'un sous-module de processus (p1, ..., pm) supplémentaire ou d'un module de processus (P1, ..., Pn) pour commander et/ou réguler le sous-module de processus (p1, ..., pm) qui lui est associé.

8. Installation de production (1) selon la revendication 7, **caractérisée en ce que** le dispositif de commande et/ou de régulation (3) de niveau supérieur est conçu pour interroger automatiquement des informations auprès des sous-modules de processus (p1, ..., pm) reliés au réseau de communication (2), les informations interrogeables par le dispositif de commande et/ou de régulation (3) de niveau supérieur comprenant au moins d'une part des informations sous la forme de fonctions de base et/ou de fonctions spéciales du sous-module de processus (p1, ..., pm) respectif concernant les processus de base ou les processus spéciaux exécutables par le sous-module de processus (p1, ..., pm) et/ou, d'autre part, des informations sous la forme de paramètres de processus donnés et/ou à attendre concernant la sous-portion de processus exécutée ou à exécuter par le sous-module de processus (p1, ..., pm) qui met ces informations à disposition.

9. Installation de production (1) selon la revendication 8, **caractérisée en ce que** chaque dispositif électronique (6) d'un sous-module de processus (p1, ..., pm) est conçu de telle sorte que les processus spéciaux qui peuvent être exécutés avec le sous-module de processus (p1, ..., pm) respectif sont configurables, le dispositif de commande et/ou de régulation (3) de niveau supérieur étant conçu pour configurer spécifiquement au produit des dispositifs électroniques (6) individuels des sous-modules de processus (p1, ..., pm) en vue d'exécuter la production en se basant sur les informations interrogées auprès des sous-modules de processus (p1, ..., pm) ou des modules de processus (P1, ..., Pn) reliés au réseau de communication (2).

10. Installation de production (1) selon l'une des revendications 8 et 9, **caractérisée en ce que** le dispositif de commande et/ou de régulation (3) de niveau supérieur est conçu pour, avant le début de la production à exécuter par l'installation de production (1), acquérir par le biais du réseau de communication (2) des informations à propos de l'état respectif des sous-modules de processus (p1, ..., pm).

11. Installation de production (1) selon l'une des revendications précédentes, **caractérisée en ce que** les informations échangées par le biais du réseau de communication (2) sont encapsulées.

12. Installation de production (1) selon l'une des revendications précédentes, **caractérisée en ce que** le dispositif de commande et/ou de régulation (3) de niveau supérieur est conçu pour afficher les composants respectifs de l'installation de production (1) et/ou les informations interrogées auprès des sous-modules de processus (p1, ..., pm) ou des modules de processus (P1, ..., Pn) individuels sur un dispositif de représentation.
